# EUROPÄISCHE PATENTSCHRIFT

(11) **EP 0 945 291 B1**
(45) Veröffentlichungstag und Bekanntmachung des Hinweises auf die Patenterteilung: **05.12.2001**
(21) Anmeldenummer: 99103836.5
(22) Anmeldetag: 27.02.1999
(51) Int. Cl.: B60H 1/32

(54) **Vorrichtung und Verfahren zum Heizen und Kühlen eines Nutzraumes eines Kraftfahrzeuges**
Means and method for heating and colling a utility space of a motor vehicle
Dispositif et procédé pour chauffer et réfrigérer l'espace de chargement d'un véhicule

(30) Priorität: 27.03.1998 DE 19813674
(43) Veröffentlichungstag der Anmeldung: 29.09.1999
(73) Patentinhaber: DaimlerChrysler AG, 70567 Stuttgart (DE)
(72) Erfinder: Cäsar, Roland, 70378 Stuttgart (DE); Skupin, Klaus, 73274 Notzingen (DE); Wertenbach, Jürgen, 70734 Fellbach (DE)

(56) Entgegenhaltungen:
- EP-A1- 0 350 764
- WO-A1-98/03362
- DE-A1- 3 318 025
- DE-A1- 3 443 899
- DE-A1- 4 142 314

## Beschreibung

Die Erfindung betrifft eine Vorrichtung zum Heizen und Kühlen eines Nutzraumes nach der im Oberbegriff des Anspruches 1 näher definierten Art und ein Verfahren zum Betreiben der Vorrichtung nach der im Oberbegriff des Anspruches 11 näher definierten Art.

Aus der gattungsgemäßen DE 33 18 025 A1 ist eine Vorrichtung der eingangs erwähnten Art für Kraftfahrzeuge mit einem Verdampfer bekannt, die mit den Abgasen einer Brennkraftmaschine beheizt wird. Der Verdampfer liegt mit einem Expansionsventil in Reihe, welches nur solange wirksam ist, bis die Abwärme der Brennkraftmaschine einen vorgegebenen Wert besitzt. Darüber hinaus ist in dieser Klimaanlage ein Kompressor angeordnet, der mit der Änderung des wirksamen Querschnitts des Expansionsventiles eine Drehzahlverringerung auf einen von Null verschiedenen Wert erfährt. Der Heizbetrieb vollzieht sich bei dieser Klimaanlage in drei Stufen. In der ersten Stufe, kurz nach der Inbetriebnahme des Kraftfahrzeuges, verdichtet der Kompressor das Kältemittel und führt es über ein Vierwege-Ventil dem Verdampfer zu, wo ein Wärmeaustausch vom Kältemittel auf die dem Nutzraum einströmende Nutzraumluft übertragen wird. Mit ausreichender Abwärme der Brennkraftmaschine wird eine Bypassleitung, die einen Abgaswärmetauscher enthält, durch Umstellen eines Dreiwege-Ventils eingeschaltet. Dadurch liefert die Abwärme der Brennkraftmaschine die zum Beheizen des Innenraums erforderliche Wärme. Anschließend daran erfolgt der übliche Heizbetrieb mit Hilfe eines Luft-Kühlmittel-Wärmetauschers, dem das Kühlmittel der Brennkraftmaschine zugeführt wird. In dieser dritten Stufe ist die Bypassleitung wieder ausgeschaltet. Dabei wird zunächst das Expansionsventil geschlossen und das in der Bypassleitung befindliche Kältemittel mit Hilfe des Kompressors evakuiert.

Nachteilig bei dieser bekannten Lösung ist jedoch, daß der dreistufige Heizbetrieb der Klimaanlage einen hohen konstruktiven und regelungstechnischen Aufwand erfordert.

Weiterhin ist aus der DE 34 43 899 C2 eine Vorrichtung zum Heizen und kühlen eines Nutzraumes eines von einer Brennkraftmaschine angetriebenen Kraftfahrzeuges bekannt. Bei dieser bekannten Vorrichtung wird, wenn die Nutzraumluft beheizt werden soll, das Kältemittel nach dem Kompressor über eine Kältemittelweiche in eine zu der den Kondensator und die Expansionseinrichtung enthaltenden parallel geschalteten Bypassleitung geführt. In dieser Bypassleitung wird in einem Wärmetauscher durch einen geschlossenen Zwischenluftkreislauf das Kältemittel durch die Zwischenluft aufgeheizt. Im Wärmetauscher des Zwischenluftkreislaufes wird die dort mittels eines Gebläses geförderte Zwischenluft durch den Abgasstrom der Brennkraftmaschine erwärmt.

Nachteilig ist dabei, neben der Komplexität der beschriebenen Lösung, daß ein Hilfsmassenstrom zur Wärmeübertragung aufgeheizt werden muß und nur eine Teilmenge der Wärme nutzbar überträgt. Des weiteren wird die bei wirkungsgradoptimierten Motoren geringe Wärmemenge im Abgas durch die unvermeidbaren Übertragungsverluste weiter verringert und aufgrund der thermischen Masse der zusätzlich beteiligten Komponenten nur verzögert übertragen.

Der vorliegenden Erfindung liegt daher die Aufgabe zugrunde, die über den Kältemittelkreislauf auf die Nutzraumluft übertragene Wärmeleistung bei Fahrzeugen, insbesondere bei verbrauchsoptimierten Fahrzeugen wie beispielsweise Dieselfahrzeugen, insgesamt und unmittelbar nach der Inbetriebnahme zu erhöhen, die Wirksamkeit einer Vorrichtung zum Heizen und Kühlen zu erhöhen und deren Ansprechzeit zu verkürzen.

Erfindungsgemäß wird diese Aufgabe durch die im kennzeichnenden Teil des Vorrichtungsanspruchs 1 genannten Merkmale sowie durch die im kennzeichnenden Teil des Verfahrensanspruches 11 genannten Verfahrensschritte gelöst.

Bei der Verwendung der Vorrichtung zum Heizen eines Nutzraumes eines Kraftfahrzeuges wird das Kältemittel in vorteilhafter Weise nacheinander in der Expansionseinrichtung auf eine Temperatur unterhalb einer Ansaugtemperatur des Kältemittels in den Kompressor expandiert, in dem Umgebungswärmetauscher mit Umgebungsluft beaufschlagt, in dem Abgaswärmetauscher mit den Abgasen der Brennkraftmaschine erwärmt, in dem Kompressor komprimiert, in dem Innenraumwärmetauscher mit kalter Fahrzeuginnenraumluft beaufschlagt und der Fahrzeuginnenraum mit der im Innenraumwärmetauscher erwärmten Fahrzeuginnenraumluft beheizt.

Durch die erfinderische serielle Anordnung der Komponenten wird ein thermodynamischer Kreislaufprozeß ermöglicht, bei dem Heiz- und Kälteleistung unter nahezu allen Betriebszuständen der Brennkraftmaschine in ausreichendem Maße zur Verfügung gestellt werden kann. Dabei wird der Kältemittelmassenstrom mittels dem Kompressor in Abhängigkeit von der notwendigen Heiz- oder Kälteleistung derart reguliert, daß am Innenraumwärmetauscher der für die aufzunehmende bzw. abzuführende Leistung erforderliche Kältemittelmassenstrom zur Verfügung steht.

Der Kältemittelmassenstrom ist weitgehend unabhängig vom Prozeßdruck im Kreislauf, so daß die Vorrichtung, selbst bei geringem oder großem Leistungsbedarf, ständig in einem Bereich mit einer hohen Effizienz betrieben werden kann. Damit ist ein Regelbereich der Heiz- oder Kälteleistung von 0 bis zu einem maximalen, in technisch sinnvollem Umfang erreichbaren Wert mit einem hohen Wirkungsgrad der Vorrichtung erzielbar.

Durch das erfindungsgemäße Verfahren wird der Massenstrom des Kältemittels abhängig von der geforderten Heizleistung und der angebotenen Wärmemenge der Umgebung und der Abwärme der Brennkraftmaschine bedarfsgerecht variiert, damit in einfacher Weise die für die Kühlung im Sommer fest installierte Klimaanlage zur Beheizung des Innenraumes des Kraftfahrzeuges an kalten Tagen nutzbar wird.

Vorteilhafte Weiterbildungen und Ausgestaltungen der Erfindung ergeben sich aus den Unteransprüchen und aus den nachfolgend anhand der Zeichnung prinzipmäßig beschriebenen Ausführungsbeispielen.

Es zeigt:
- Fig. 1: ein Schaltschema einer Vorrichtung zum Heizen und Kühlen eines Nutzraumes eines Kraftfahrzeuges;
- Fig. 2: ein Schaltschema einer weiteren Ausführungsform der Vorricntung zum Heizen und Kühlen eines Nutzraumes eines Kraftfahrzeuges gemäß Fig. 1;
- Fig. 3: ein Schaltschema einer weiteren Ausführungsform der Vorrichtung zum Heizen und Kühlen eines Nutzraumes eines Kraftfahrzeuges gemäß Fig. 1 und Fig. 2;
- Fig. 4: eine Kältemittelleitung, die spiralförmig an einer Abgasleitung angeordnet ist;
- Fig. 5: einen Abgaswärmetauscher mit einer Regelungseinrichtung, die als eine ummantelnde Röhre dargestellt ist;
- Fig. 6: eine Ausführungsform einer Expansionseinrichtung, die zwei parallele Kältemittelleitungen aufweist, die jeweils ein Expansionsventil und ein Rückschlagventil enthalten;
- Fig. 7: eine Ausiührungsform der Expansionseinrichtung gemäß Fig. 6, die zwei parallele Kältemittelleitungen aufweist, die jeweils ein Expansionaventil und ein Rückschlagventil, die als räumliche Einheit dargestellt sind, enthalten; und
- Fig. 8: eine Ausführungsform der Expansionseinrichtung gemäß Fig. 6 und Fig. 7, die eine Kältemittelleitung aufweist, die ein als räumlich ausgebildete Einheit ausgebildetes kombiniertes Expansionsventil enthält.

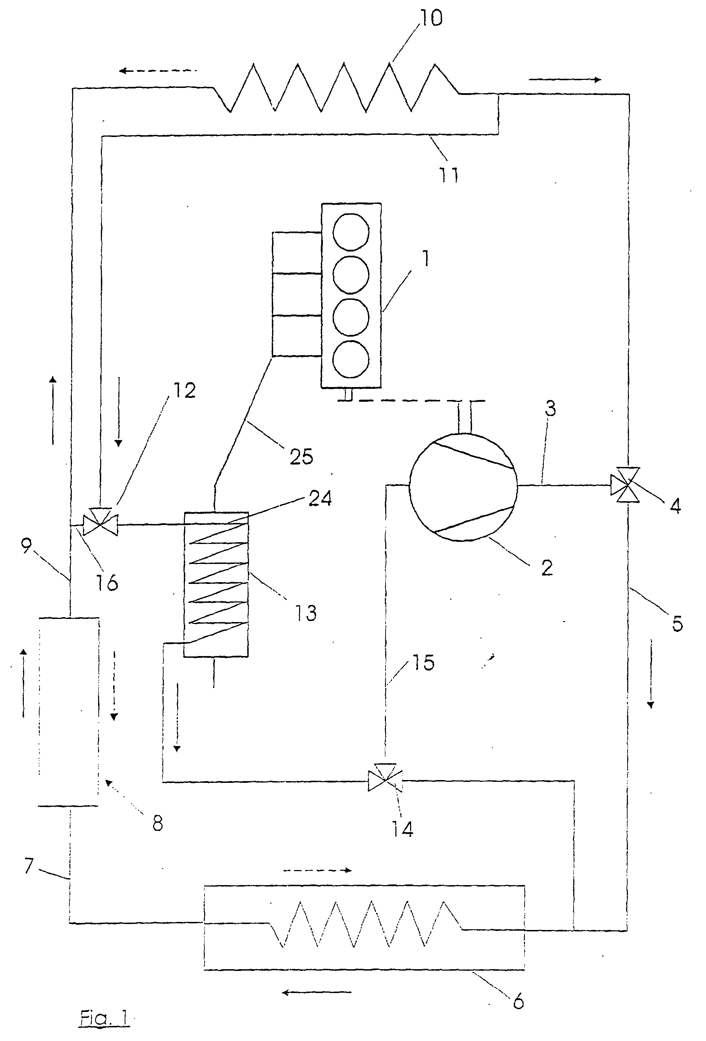

In Fig. 1 ist ein Schaltschema einer Vorrichtung zum Heizen und Kühlen eines Nutzraumes eines Kraftfahrzeuges mit einer Brennkraftmaschine 1 dargestellt, wobei die durchgezogenen Pfeile die Strömungsrichtung eines Kältemittels für Heizbetrieb und die gestrichelt ausgeführten Pfeile die Strömungsrichtung für Kühlbetrieb anzeigen.

Das Kältemittel wird während dem Heizbetrieb von einem Kompressor 2 komprimiert und gelangt in einer Kältemittelleitung 3 zu einem 3/2 Wegeventil 4, welches als Modusweiche für Heiz- oder Kühlbetrieb ausgebildet ist. Bei Heizbetrieb wird das Kältemittel über eine Leitung 5 zu einem Innenraumwärmetauscher 6 geführt, wo es mit kälterer Nutzraumluft, welche durch den Innenraumwärmetauscher 6 in den Nutzraum strömt, beaufschlagt wird. Das Kältemittel strömt von dem Innenraumwärmetauscher 6 über eine Kältemittelleitung 7 zu einer Expansionseinrichtung 8. Von dort strömt das Kältemittel durch eine Leitung 9 zu einem Umgebungswärmetauscher 10 und wird mit Umgebungsluft beaufschlagt. In dem Umgebungswärmetauscher 10 wird das Kältemittel durch die Umgebungsluft erwärmt und strömt anschließend über eine Kältemittelleitung 11 und einem 3/2 Wege-Ventil 12 zu einem Abgaswärmetauscher 13. Dort wird das Kältemittel mit den heißen Abgasen der Brennkraftmaschine 1 beaufschlagt und weiter erwärmt. Von dem Abgaswärmetauscher 13 gelangt das Kältemittel über ein 3/2 Wegeventil 14, welches als Kreislaufventil ausgebildet ist, und eine Kältemittelleitung 15 wieder zu dem Kompressor 2, womit der Kreisprozeß geschlossen ist.

Wird das Kältemittel in der Expansionseinrichtung 8 auf eine Temperatur expandiert, die unterhalb der Umgebungstemperatur liegt, kann die den Umgebungswärmetauscher 10 durchströmende Umgebungsluft auf eine Temperatur unterhalb seiner Sättigungstemperatur abgekühlt werden. In diesem Fall kondensiert das Wasser, mit welchem die Umgebungsluft beladen ist, am Umgebungswärmetauscher 10 aus. Liegt die Temperatur des Kältemittels unterhalb der Sublimationslinie des Wassers, geht dieses in den festen Zustand über, d.h. es kommt zu einer Vereisung des Umgebungswärmetauschers 10. Um dieses Phänomen zu vermeiden, wird über das 3/2 Wegeventil 12 eine Bypassleitung 16 geöffnet und die Leitung 11 verschlossen, so daß der Umgebungswärmetauscher 10 nicht mehr von dem Kältemittel durchströmt wird.

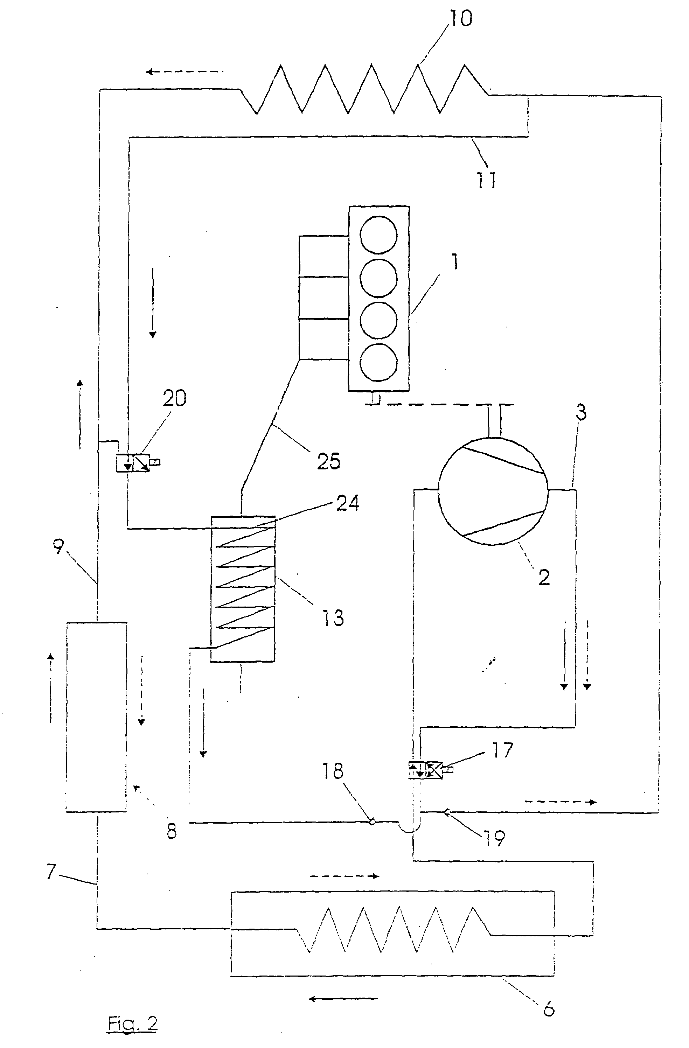

In Fig. 2 ist ein Schaltschema einer weiteren Ausführungsform der Vorrichtung zum Heizen und Kühlen eines Nutzraumes eines Kraftfahrzeuges gemäß Fig. 1 dargestellt. In diesem Ausführungsbeispiel strömt das komprimierte Kältemittel nach dem Kompressor 2 durch ein 4/2 Wegeventil 17, mittels welchem der für den jeweiligen Betriebszustand Heizen oder Kühlen erforderliche Strömungsweg des Kältemittels eingestellt wird.

Die durchgezogenen Pfeile stellen die Strömungsrichtung des Kältemittels für den Heizbetrieb und die gestrichelten Pfeile die Strömungsrichtüng für den Kühlbetrieb dar.

Während des Heizbetriebes strömt das Kältemittel zunächst unter Wärmeabgabe durch den Innenraumwärmetauscher 6, wird dann jedoch in der Expansionseinheit 8 auf eine unterhalb der Umgebungstemperatur liegende Temperatur expandiert und anschließend nacheinander in dem Umgebungswärmetauscher 10 und dem Abgaswärmetauscher 13 erwärmt. Von dort aus strömt es durch ein Rückschlagventil 18 in den Ansaugbereich des Kompressors 2.

An einem Rückschlagventil 19 liegt aufgrund des Druckverlustes in den Kreislaufkomponenten an seiner sperrenden Seite kein niedrigerer Druck als an seiner Durchflußseite an und bleibt somit aufgrund einer Schließwirkung eines nicht näher dargestellten Elementes, welches als eine Feder ausgebildet sein kann, verschlossen. Ein 3/2 Wege-Kreislaufventil 20 ermöglicht in seiner Ruhestellung den oben beschriebenen Kreislauf des Kältemittels.

Wird das 3/2 Wege-Kreislaufventil 20 geschaltet, so wird das Kältemittel vor dem Umgebungswärmetauscher 10 direkt in den Abgaswärmetauscher 13 geleitet und von dem Kompressor 2 angesaugt.

Auch in diesem Fall ist die Druckdifferenz am Rückschlagventil 19 ausreichend, um einen Durchfluß durch den Abgaswärmetauscher 13 sicherzustellen.

Während des Kühlbetriebes strömt das Kältemittel nach der Verdichtung über das in Ruhestellung befindliche 4/2 Wegeventil 17 und das Rückschlagventil 19 in den Umgebungswärmetauscher 10 und wird dort mit kühlerer Umgebungsluft beaufschlagt. Danach strömt das Kältemittel durch die Expansionseinrichtung 8, wird dort expandiert und im Innenraumwärmetauscher 6 mit wärmerer, dem Nutzraum zuzuführenden Nutzraumluft beaufschlagt. Das erwärmte Kältemittel strömt danach zu dem Kompressor 2 und wird dort wieder verdichtet, womit der Kältemittelkreislauf geschlossen ist.

Eine unzulässige Verbindung des Kältemittelkreislaufes über das Rückschlagventil 18 wird dadurch vermieden, daß der Druck auf der Durchflußseite aufgrund der Druckverluste niedriger ist als auf der sperrenden Seite.

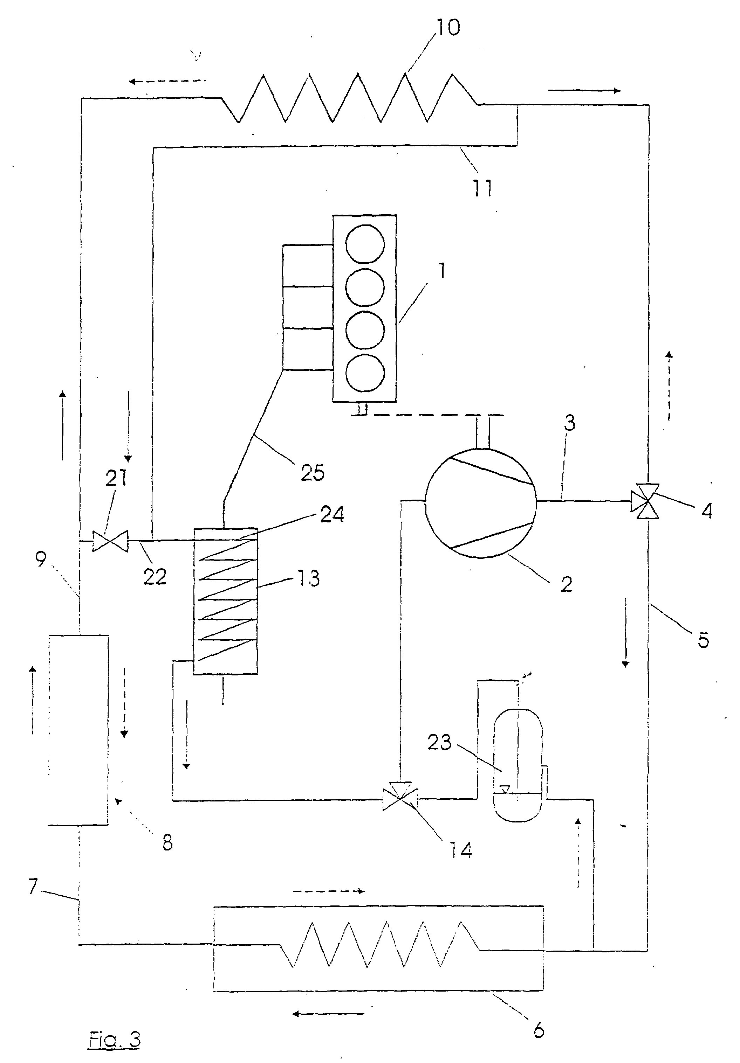

In Fig. 3 ist ein Schaltschema einer weiteren Ausführungsform der Vorrichtung zum Heizen und Kühlen eines Nutzraumes eines Kraftfahrzeuges gemäß Fig. 1 und Fig. 2 dargestellt. Ein Ventil 21 öffnet in Schaltstellung eine Bypass-Leitung 22 zum Abgaswärmetauscher 13. Aufgrund des Druckverlustes des Kältemittels im Umgebungswärmetauscher 10 wird nur ein kleiner Anteil durch diesen strömen, so daß der überwiegende Anteil des Kältemittels direkt von der Expansionseinrichtung 8 zum Abgaswärmetauscher 13 gelangt, ohne daß an Tagen mit hoher Luftfeuchtigkeit und/oder niedrigen Temperaturen das Kältemittel abkühlt oder zur Wärmeaufnahme auf einen niedrigen Druck, welcher eine uneffiziente Verdichterleistungsaufnahme bewirkt, expandiert werden muß.

In einem Pufferbehälter 23 wird je nach Betriebsmodus Heizen oder Kühlen aufgrund seiner Speicherfähigkeit von Kältemittel die Kältemittelfüllung der unterschiedlichen Volumina der jeweiligen Hochdruckseite und Niederdruckseite und der je nach Temperaturen bei Wärmeabgabe und Verdampfung ein ausreichender Ansaugdruck am Kompressor 2 sichergestellt. Gleichzeitig sammelt er überschüssige Kältemittelmengen aus dem Kreislauf bei niedrigem Kalteleistungsbedarf, also bei niedrigen Drücken auf der Hochdruckseite. Des weiteren ist in dem Pufferbehälter 23 ein Adsorbens zur Aufnahme von im Kreislauf befindlichem Wasser vorgesehen.

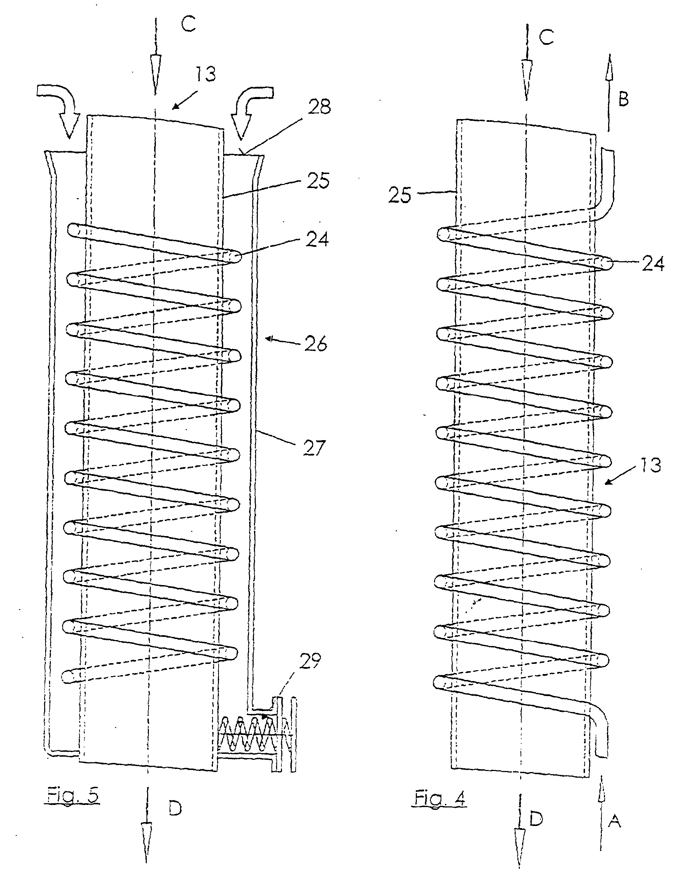

In Fig. 4 ist der Abgaswärmetauscher 13 dargestellt. In der konstruktiven Ausgestaltung des Abgaswärmetauschers 13 ist eine Kältemittelleitung 24 spiralförmig an der Außenseite einer Abgasleitung 25 angeordnet. Vorteilhafterweise ist der Abgaswärmetauscher 13 als Gegenstromwärmetauscher ausgebildet, wobei die Strömungsrichtung des Kältemittels durch einen Pfeil mit der Bezeichnung A am Eintritt des Abgaswärmetauschers 13 und mit einem Pfeil mit der Bezeichnung B am Austritt gekennzeichnet ist. Die Strömungsrichtung des Abgases der Brennkraftmaschine 1, welches im Gegenstrom zu dem Kältemittel geführt wird, ist durch einen Pfeil C am Eintritt des wärmeaustauschenden Bereiches der Abgasleitung 25 und an dessen Austritt durch den Pfeil mit der Bezeichnung D gekennzeichnet. Der Vorteil, daß die Abgase und das Kältemittel im Gegenstrom zueinander geführt werden, liegt darin, daß zwischen beiden Medien während des gesamten Wärmeüberganges immer die größtmögliche Temperaturdifferenz vorliegt und somit ein guter Austauschgrad des Abgaswärmetauschers 13 erreicht wird.

Die spiralförmigen Kältemittelleitungen 24 des Abgaswärmetauschers 13 sind im Bereich einer in der Abgasleitung 25 angeordneten Abgasreinigungsanlage, die nicht näher in der Zeichnung dargestellt ist, oder stromab von dieser angeordnet, um die Konvertierung der Abgase nicht zu stören.

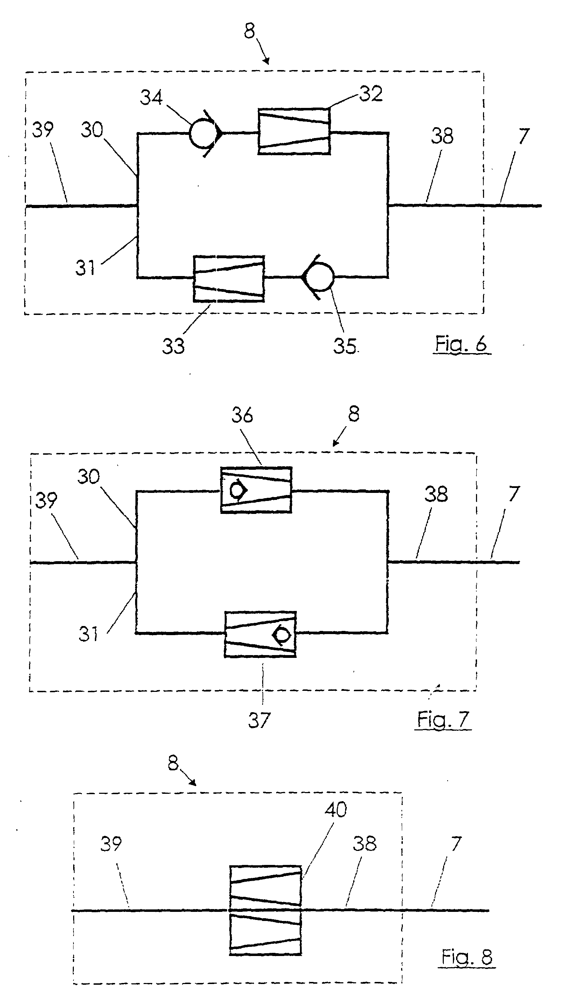

In Fig. 5 ist der Abgaswärmetauscher 13 dargestellt, der zusätzlich eine Regelungseinrichtung 26 für die zu übertragende Wärmemenge von den Abgasen auf das Kältemittel aufweist. Die Regelungseinrichtung 26 ist durch eine die Abgasleitung 25 ummantelnde Röhre 27 ausgebildet, die eine Eintrittsöffnung 28 für einen Fahrtwind aufweist und die in ihrem sich in Strömungsrichtung weitenden Querschnitt derart verschließbar ist, daß sie an ihrem Austritt 29 mit einem Staudruck des Fahrtwindes beaufschlagt ist. Auf diese Weise ist die übertragbare Wärmemenge von dem Abgas auf das Kältemittel regelbar. So besteht die Möglichkeit kurz nach Inbetriebnahme des Kraftfahrzeuges, bei der die Abgase im Vergleich zum stationären Betrieb eine geringere Temperatur aufweisen, den Austritt 29 der Regelungseinrichtung 26 zu verschließen und somit ein Abkühlen des Kältemittels in der Kältemittelleitung 24 durch überströmende kältere Umgebungsluft zu vermeiden. Andererseits kann der Austritt 29 im stationären Betriebszustand derart geöffnet werden, daß die durch die Eintrittsöffnung 28 einströmende Umgebungsluft über die Kältemittelleitung 24 hinwegströmt und somit Wärme über den Austritt 29 abführt.

In Fig. 6 ist ein Ausführungsbeispiel für den Aufbau der Expansionseinrichtung 8 dargestellt. Dabei sind zwei parallel geführte Kältemittelleitungen 30 und 31 dargestellt, die jeweils ein in Reihe geschaltetes Expansionsventil 32 bzw. 33 und ein Rückschlagventil 34 bzw. 35 enthalten. Während des Heizbetriebs wird in der Kältemittelleitung 30 das Kältemittel im Expansionsventil 32 expandiert und durchströmt danach das Rückschlagventil 34. Die Kältemittelleitung 31 hingegen ist durch die Wirkungsweise des Rückschlagventiles 35 für das Kältemittel nicht passierbar und wirkt somit als Sperreinrichtung. Bei Kühlbetrieb, der in Fig. 1 durch die gestrichelten Pfeile dargestellt ist, wirkt hingegen die Kältemittelleitung 30 mit dem Expansionsventil 32 und dem Rückschlagventil 34 als Sperreinrichtung und in der Kältemittelleitung 31 wird das Kältemittel mittels des Expansionsventiles 33 expandiert.

Fig. 7 zeigt als Variante zu den in Fig. 6 dargestellten parallelen Kältemittelleitungen 30 und 31 das Expansionsventil 32 bzw. 33 und das Rückschlagventil 34 bzw. 35 als eine räumliche Einheit. Diese somit kombinierten Expansions- und Rückschlagventile 36 bzw. 37 übernehmen die gleichen Funktionen wie die zuvor beschriebenen, in ihrer Bauart räumlich getrennten Expansionsventile 32 bzw. 33 und Rückschlagventile 34 bzw. 35 als Expansionseinrichtung 8 gemäß der Prinzipdarstellung in Fig. 1.

In Fig. 8 weist die Expansionseinrichtung 8 nur noch die Kältemittelleitungen 38 und 39 auf, die ein in einer baulichen Einheit ausgeführtes kombiniertes Exparsionsventil 40 enthalten, das im Heizbetrieb in Strömungsrichtung des Kältemittels das Kältemittel expandiert und im Kühlbetrieb ebenfalls das Kältemittel in Strömungsrichtung expandiert.

Mittels einem Verfahren zum Heizen und Kühlen eines Nutzraumes von einer Brennkraftmaschine 1 angetriebenen Kraftfahrzeuges wird das Kältemittel im Heizbetrieb nacheinander in der Expansionseinrichtung 8 auf eine Temperatur unterhalb der Ansaugtemperatur des Kältemittels des Kompressors 2 expandiert, in dem Umgebungswärmetauscher 10 mit wärmerer Umgebungsluft beaufschlagt, in dem Abgaswärmetauscher 13 mit den Abgasen der Brennkraftmaschine 1 erwärmt, in dem Kompressor 2 komprimiert, in dem Innenraumwärmetauscher 6 mit kalter Fahrzeuginnenraumluft abgekühlt und damit der Fahrzeuginnenraum aufgewärmt.

Im Kühlbetrieb wird das Kältemittel nacheinander in dem Umgebungswärmetauscher 10 mit kälterer Umgebungsluft beaufschlagt und in der Expansionseinrichtung 8 auf eine Temperatur unterhalb einer Nutzraumlufttemperatur expandiert, wobei die Nutzraumluft in dem Innenraumwärmetauscher 6 mit dem kälteren Kältemittel beaufschlagt wird.

Als besonders geeignetes Kältemittel hat sich Kohlendioxid (CO₂) erwiesen, das umweltverträglich, nicht brennbar und nicht giftig ist. Darüber hinaus weist CO₂ eine hohe volumetrische Kälteleistung auf, die im Vergleich mit anderen Kältemitteln einen geringeren zirkulierenden Massenstrom in der Vorrichtung zum Heizen und Kühlen bei gleicher Leistungsfähigkeit erfordert.

## Patentansprüche

1. Vorrichtung zum Heizen und Kühlen eines Nutzraumes eines von einer Brennkraftmaschine angetriebenen Kraftfahrzeuges, welche einen Kältemittelkreislauf mit einem Kompressor, einem Umgebungswärmetauscher, wenigstens einer Expansionseinrichtung, einem Innenraumwärmetauscher und einen von den Abgasen der Brennkraftmaschine beheizbaren Abgaswärmetauscher aufweist, wobei ein Kältemittel bei Heizbetrieb durch den Kompressor und unter Wärmeabgabe durch den dem Kompressor nachgeschalteten Innenraumwärmetauscher führbar ist,
**dadurch gekennzeichnet, daß**
zum Heizen der Kompressor (2), der Innenraumwärmetauscher (6), die Expansionseinrichtung (8), der Umgebungswärmetauscher (10) und der Abgaswärmetauscher (13) seriell derart angeordnet sind, daß das Kältemittel in der Expansionseinrichtung (8) auf eine Temperatur unterhalb einer Ansaugtemperatur des Kältemittels in den Kompressor expandierbar, in dem Umgebungswärmetauscher (10) mit wärmerer Umgebungsluft beaufschlagbar, in dem Abgaswärmetauscher (13) mit den Abgasen der Brennkraftmaschine (1) erhitzbar und in dem Kompressor (2) komprimierbar ist, und daß zum Kühlen der Kompressor (2), der Umgebungswärmetauscher (10), die Expansionseinrichtung (8), und der Innenraumwärmetauscher (6) seriell angeordnet sind, wobei das Kältemittel in dem Umgebungswärmetauscher (10) mit kälterer Umgebungsluft beaufschlagbar und in der Expansionseinrichtung (8) auf eine Temperatur unterhalb einer Nutzraumlufttemperatur expandierbar ist, und wobei die Nutzraumluft in dem Innenraumwärmetauscher (6) mit dem Kältemittel beaufschlagbar ist.

2. Vorrichtung nach Anspruch 1,
**dadurch gekennzeichnet, daß**
zwischen der Expansionseinrichtung (8) und dem Abgaswärmetauscher (13) eine absperrbare Bypass-leitung (16) derart vorgesehen ist, daß das Kältemittel unter Umgehung des Umgebungswärmetauschers (10) direkt in den Abgaswärmetauscher (13) führbar ist.

3. Vorrichtung nach Anspruch 1 oder 2,
**dadurch gekennzeichnet, daß**
der Abgaswärmetauscher (13) Kältemittelleitungen (24) aufweist, welche spiralförmig an der Außen- oder Innenseite einer Abgasleitung (25) angeordnet sind.

4. Vorrichtung nach einem der Ansprüche 1 bis 3,
**dadurch gekennzeichnet , daß**
der Abgaswärmetauscher (13) als Gegenstromwärmetauscher ausgebildet ist.

5. Vorrichtung nach Anspruch 3 oder 4,
**dadurch gekennzeichnet, daß**
die spiralförmigen Kältemittelleitungen (24) des Abgaswärmetauschers (13) im Bereich einer in der Abgasleitung (25) angeordneten Abgasreinigungsanlage oder stromab von dieser angeordnet ist.

6. Vorrichtung nach einem der Ansprüche 1 bis 5,
**dadurch gekennzeichnet, daß**
der Abgaswärmetauscher (13) eine Regelungseinrichtung (26) für die zu übertragende Wärmemenge von den Abgasen auf das Kältemittel aufweist.

7. Vorrichtung nach Anspruch 6,
**dadurch gekennzeichnet, daß**
die Regelungseinrichtung (26) als eine die Abgasleitung (25) und die spiralförmige Kältemittelleitung (24) ummantelnde Röhre (27) ausgebildet ist, welche eine Eintrittsöffnung (28) für einen Fahrtwind aufweist und in ihrem sich in Strömungsrichtung weitenden Querschnitt derart verschließbar ist, daß sie an ihrem Austritt (29) mit einem Staudruck des Fahrtwindes beaufschlagt ist.

8. Vorrichtung nach einem der Ansprüche 1 bis 7,
**dadurch gekennzeichnet, daß**
die Expansionseinrichtung (8) mit einer ersten Kältemittelleitung (30) und mit einer zweiten parallel zu dieser geschalteten Kältemittelleitung (31) in dem Kühlmittelkreislauf, welche jeweils ein Expansionsventil (32 bzw. 33) und ein mit diesem in Serie geschalteten Rückschlagventil (34 bzw. 35) aufweisen, ausgebildet ist, wobei die erste Kältemittelleitung (30) bei Heizbetrieb zur Expansion des Kältemittels and die zweite Kältemittelleitung (31) als Sperreinrichtung vorgesehen ist, und die erste Kältemittelleitung (30) bei Kühlbetrieb als Sperreinrichtung und die zweite Kältemittelleitung (31) zur Expansion des Kältemittels vorgesehen ist.

9. Vorrichtung nach einem der Ansprüche 1 bis 7,
**dadurch gekennzeichnet, daß**
das Expansionsventil (32 bzw. 33) und das Rückschlagventil (34 bzw. 35) jeweils als räumliche Einheit in Form eines kombinierten Expansions- und Rückschlagventiles (36 bzw. 37) ausgebildet sind.

10. Vorrichtung nach einem der Ansprüche 1 bis 7,
**dadurch gekennzeichnet, daß**
Kältemittelleitungen (38 und 39), ein in einer räumlichen Einheit ausgeführtes kombiniertes Expansionsventil (40) aufweisen, welches derart ausgebildet ist, daß es zur Expansion des Kältemittels in beide Strömungsrichtungen schaltbar ist und der Kühlmittelfluß in der der Strömungsrichtung des Kältemittels entgegengesetzten Richtung versperrbar ist.

11. Verfahren zum Heizen und Kühlen eines Nutzraumes eines von einer Brennkraftmaschine angetriebenen Kraftfahrzeuges, wobei ein Kältemittel durch einen Kältemittelkreislauf mit einem Kompressor, einen Umgebungswärmetauscher, wenigstens einer Expansionseinrichtung, einen Innenraumwärmetauscher und einen von den Abgasen der Brennkraftmaschine beheizbaren Abgaswärmetauscher geführt wird, wobei das Kältemittel bei Heizbetrieb in dem Kompressor verdichtet und erwärmt wird und anschließend in dem Innenraumwärmetauscher abgekühlt wird,
**dadurch gekennzeichnet, daß**
zum Heizen das Kältemittel nacheinander in der Expansionseinrichtung (8) auf eine Temperatur unterhalb einer Ansaugtemperatur des Kältemittels in den Kompressor (2) expandiert wird, in dem Umgebungswärmetauscher (10) mit Umgebungsluft beaufschlagt wird, in dem Abgaswärmetauscher (13) mit den Abgasen der Brennkraftmaschine (1) erwärmt und in dem Kompressor (2) komprimiert wird, und daß zum Kühlen das Kältemittel nacheinander mit dem Ümgebungswärmetauscher (10) mit kälterer Umgebungsluft beaufschlagt und in der Expansionseinrichtung (8) auf eine Temperatur unterhalb einer Nutzraumlufttemperatur expandiert wird, und die Nutzraumluft in dem Innenraumwärmetauscher (6) mit dem Kältemittel beaufschlagt wird.

12. Verfahren nach Anspruch 11,
**dadurch gekennzeichnet, daß**
als Kältemittel ein umweltverträgliches, nicht brennbares und nicht giftiges Fluid, vorzugsweise Kohlendioxid (CO₂), verwendet wird.

## Claims

1. Device for heating and cooling a useful space of a motor vehicle driven by a combustion engine, which has a coolant circuit with a compressor, an ambient heat exchanger, at least one expansion device, an inner area heat exchanger and an exhaust gas heat exchanger which can be heated by the exhaust gases of the combustion engine, wherein a coolant can be fed through the compressor during heating operation and, in releasing heat, can be fed through the inner area heat exchanger switched subsequently to the compressor,
**characterised in that**
for the purpose of heating the compressor (2), the inner area heat exchanger (6), the expansion device (8), the ambient heat exchanger (10) and the exhaust gas heat exchanger (13) are arranged in series, in such a way that the coolant can be expanded in the expansion device (8) to a temperature below a suction temperature of the coolant into the compressor, can be impacted with warmer ambient air in the ambient heat exchanger (10), can be heated in the exhaust gas heat exchanger (13) with the exhaust gases of the combustion engine (1) and can be compressed in the compressor (2), and that for the purpose of cooling the compressor (2), the ambient heat exchanger (10), the expansion device (8) and the inner area heat exchanger (6) are arranged in series, wherein the coolant can be impacted with colder ambient air in the ambient heat exchanger (10) and be expanded in the expansion device (8) to a temperature below an air temperature of the useful space, and wherein the air of the useful space can be impacted with the coolant in the inner area heat exchanger (6).

2. Device according to Claim 1
**characterised in that**
between the expansion device (8) and the exhaust gas heat exchanger (13) a bypass pipe (16) which can be blocked is provided, in such a way that the coolant after bypassing the ambient heat exchanger (10) can be fed directly into the exhaust gas heat exchanger (13).

3. Device according to Claim 1 or 2
**characterised in that**
the exhaust gas heat exchanger (13) has coolant pipes (24), which are arranged in spiral form on the outer or inner side of an exhaust gas pipe (25).

4. Device according to one of the Claims 1 to 3
**characterised in that**
the exhaust gas heat exchanger (13) is formed as a counter-flow heat exchanger.

5. Device according to Claim 3 or 4
**characterised in that**
the spiral form coolant pipes (24) of the exhaust gas heat exchanger (13) are arranged in the area of an exhaust gas purification installation arranged in the exhaust pipe (25) or downstream therefrom.

6. Device according to one of the Claims 1 to 5
**characterised in that**
the exhaust gas heat exchanger (13) has a control device (26) for the quantity of heat to be transferred from the exhaust gases to the coolant.

7. Device according to Claim 6
**characterised in that**
the control device (26) is formed as a tube (27) encapsulating the exhaust pipe (25) and the spiral form coolant pipe (24), wherein this tube (27) has an inlet opening (28) for a headwind and can be closed in its cross-section widening in the flow direction, in such a way that it is impacted at its outlet (29) with an impact pressure of the headwind.

8. Device according to one of the Claims 1 to 7
**characterised in that**
the expansion device (8) is formed with a first coolant pipe (30) and with a second coolant pipe (31) switched parallel to the first coolant pipe (30) in the coolant circuit, which respectively have an expansion valve (32 / 33) and a check valve (34 / 35) which can be switched in series with it, wherein the first coolant pipe (30) during heating operation is provided for expansion of the coolant and the second coolant pipe (31) is provided as a blocking device, and the first coolant pipe (30) during cooling operation is provided as a blocking device and the second coolant pipe (31) is provided for expansion of the coolant.

9. Device according to one of the Claims 1 to 7
**characterised in that**
the expansion valve (32 / 33) and the check valve (34 / 35) are respectively formed as a physical unit in the form of a combined expansion and check valve (36 / 37).

10. Device according to one of the Claims 1 to 7
**characterised in that**
coolant pipes (38 and 39) have a combined expansion valve (40) formed in a physical unit, which is designed in such a way that for the purpose of expanding the coolant it can be switched into both flow directions and the coolant flow in the contrary direction to the flow direction of the coolant can be blocked.

11. Method of heating and cooling a useful space of a motor vehicle driven by a combustion engine, wherein a coolant is fed through a coolant circuit with a compressor, an ambient heat exchanger, at least one expansion device, an inner area heat exchanger and an exhaust gas heat exchanger which can be heated by the exhaust gases of the combustion engine, wherein the coolant during heating operation is compressed in the compressor and heated up and is subsequently cooled in the inner area heat exchanger,
**characterised in that**
for the purpose of heating the coolant is successively expanded in the expansion device (8) to a temperature below a suction temperature of the coolant into the compressor (2), impacted with ambient air in the ambient heat exchanger (10), heated with the exhaust gases of the combustion engine (1) in the exhaust gas heat exchanger (13) and compressed in the compressor (2), and that for the purpose of cooling the coolant is successively impacted with the ambient heat exchanger (10) with colder ambient air and expanded in the expansion device (8) to a temperature below an air temperature of the useful space and the air of the useful space is impacted in the inner area heat exchanger (6) with the coolant.

12. Method according to Claim 11
**characterised in that**
an environmentally friendly, non-flammable, non-toxic fluid, preferably carbon dioxide (CO₂), is preferably used as the coolant.

## Revendications

1. Dispositif pour chauffer et refroidir un espace utile d'un véhicule automobile entraîné par un moteur à combustion interne, et qui comporte un circuit pour un fluide de refroidissement comprenant un compresseur, un échangeur de chaleur de l'environnement, au moins un dispositif de détente, un échangeur de chaleur de l'espace interne et un échangeur de chaleur à gaz d'échappement, qui peut être chauffé par les gaz d'échappement du moteur à combustion interne, et dans lequel un fluide de refroidissement peut être guidé, lors du fonctionnement de chauffage, à travers le compresseur et, tout en délivrant de la chaleur, à travers l'échangeur de chaleur qui est monté en aval du compresseur, **caractérisé en ce que** pour le chauffage, le compresseur (2), l'échangeur de chaleur (6) de l'espace intérieur, le dispositif de détente (8), l'échangeur de chaleur de l'environnement (10) et l'échangeur à gaz d'échappement (13) sont disposés en série de telle sorte que le fluide de refroidissement peut subir une détente dans le dispositif de détente (8) à une température inférieure à la température d'aspiration du fluide de refroidissement dans le compresseur, peut être chargé par de l'air ambiant plus chaud dans l'échangeur de chaleur de l'environnement (10), peut être chauffé dans l'échangeur de chaleur à gaz d'échappement (13) par les gaz d'échappement du moteur à combustion interne (1) et peut être comprimé dans le compresseur et que pour le refroidissement, le compresseur (2), l'échangeur de chaleur de l'environnement (10), le dispositif de détente (8) et l'échangeur de chaleur (6) de l'espace intérieur sont disposés en série, le fluide de refroidissement pouvant être chargé par de l'air ambiant plus froid, dans l'échangeur de chaleur de l'environnement (10) pouvant être chargé par de l'air ambiant plus froid et est détendu dans le dispositif de détente (8) à une température inférieure à une température de l'air de l'espace utile, et l'air de l'espace utile dans l'échangeur de chaleur (6) de l'espace interne pouvant être chargé par le fluide de refroidissement.

2. Dispositif selon la revendication 1, **caractérisé en ce qu'**entre le dispositif de détente (8) et l'échangeur de chaleur à gaz d'échappement (13) est prévu une canalisation de by-pass pouvant être fermé (16) de sorte que le fluide de refroidissement peut être guidé directement pour être introduit dans l'échangeur à gaz d'échappement (13), en contournant l'échangeur de chaleur de l'environnement (10).

3. Dispositif salon la revendication 1 ou 2, **caractérisé en ce que** l'échangeur de chaleur à gaz d'échappement (13) possède des canalisations (24) pour le fluide de refroidissement, qui sont disposés en hélice sur la face extérieure ou sur la face intérieure d'une canalisation d'un tuyau d'échappement (25).

4. Dispositif selon l'une des revendications 1 à 3, **caractérisé en ce que** l'échangeur de chaleur à gaz d'échappement (13) est agencé sous la forme d'un échangeur de chaleur à contre-courant.

5. Dispositif selon la revendication 3 ou 4, **caractérisé en ce que** les canalisations de forme hélicoïdale du fluide de refroidissement (24) sont disposées au voisinage d'une installation d'épuration des gaz d'échappament, disposée dans le tuyau d'échappement (25), ou en amont de cette installation.

6. Dispositif selon l'une des revendications 1 à 5, **caractérisé en ce que** l'échangeur de chaleur à gaz d'échappement (13) comporte un dispositif de régulation (26) pour la quantité de chaleur devant être transmise par les gaz d'échappement au fluide de refroidissement.

7. Dispositif selon la revendication 6, **caractérisé en ce que** le dispositif de régulation (26) est agencé sous la forme d'une canalisation ou sous la forme d'un tube (27) qui entoure le tuyau d'échappement (25) et la canalisation de forme hélicoïdale (24) pour le fluide de refroidissement et qui comporte une ouverture d'entrée (28) pour un vent de déplacement et dont la section transversale, qui est étendue dans la direction de l'écoulement, peut être fermée de telle sorte que le tube peut être chargé au niveau de sa sortie (29), par une pression de refoulement du vent de déplacement.

8. Dispositif selon l'une des revendications 1 à 7, **caractérisé en ce que** le dispositif de détente (8) est réalisé avec une première canalisation (30) pour le fluide de refroidissement et par une seconde canalisation (31) du fluide de refroidissement, qui est branchée en parallèle avec la précédente, dans le circuit du fluide de refroidissement, ces canalisations comportant chacune une soupape de détente (32 et 33) et une soupape antiretour (34 et 35) branchée en série avec la soupape précédente, la première canalisation (30) pour le fluide de refroidissement étant prévue lors du fonctionnement de chauffage pour la détente du fluide de refroidissement, et la seconde canalisation (31) pour le fluide de refroidissement étant prévue en tant que dispositif de blocage, et que la première canalisation (30) pour le fluide de refroidissement est prévue, lors du fonctionnement de refroidissement, en tant que dispositif de blocage et la seconde canalisation (31) pour le fluide de refroidissement est prévue pour la détente du fluide de refroidissement.

9. Dispositif selon l'une des revendications 1 à 7, **caractérisé en ce que** la soupape (32 ou 33) et la soupape antiretour (34 ou 35) sont agencées respectivement sous la forme d'une unité spatiale se présentant sous la forme d'une soupape de détente et antiretour combinée (36 ou 37).

10. Dispositif selon l'une des revendications 1 à 7, **caractérisé en ce que** les canalisations (38 et 39) pour le fluide de refroidissement comportent une soupape de détente combinée (40), qui est agencée sous la forme d'une unité spatiale et qui est conçue de telle sorte qu'elle peut être commutée dans deux directions d'écoulement pour la détente du fluide de refroidissement et que la circulation du fluide de refroidissement peut être bloqué dans la direction qui est opposée à la direction d'écoulement du fluide de refroidissement.

11. Procédé pour chauffer et refroidir un espace utile d'un véhicule automobile entraîné par un moteur à combustion interne, un fluide de refroidissement étant guidé dans un circuit pour un fluide de refroidissement comprenant un compresseur, un échangeur de chaleur de l'environnement, au moins un dispositif de détente, un échangeur de chaleur interne et un échangeur de chaleur à gaz d'échappement, qui peut être chauffé par les gaz d'échappement du moteur à combustion interne, et dans lequel le fluide de refroidissement est comprimé et chauffé, lors du fonctionnement de chauffage, dans le compresseur, et ensuite est refroidi dans l'échangeur de chaleur de l'espace intérieur, **caractérisé en ce que** pour le chauffage, le fluide de refroidissement est successivement détendu dans le dispositif de détente (8) une température inférieure à une température d'aspiration du fluide de refroidissement dans le compresseur (2), est chargé par de l'air ambiant dans l'échangeur de chaleur de l'environnement (10), est chauffé dans l'échangeur de chaleur des gaz d'échappement des gaz d'échappement (13) par les gaz d'échappement du moteur à combustion interne (1) et est comprimé dans le compresseur (2), et que pour le refroidissement, le fluide de refroidissement est successivement chargé par de l'air ambiant plus froid au moyen de l'échangeur de chaleur de l'environnement (16) et est détendu dans le dispositif de détente (8) à une température inférieure à une température de l'air dans l'espace utile, et l'air de l'espace utile est chargé par le fluide de refroidissement dans l'échangeur de chaleur intérieur (6).

12. Procédé selon la revendication 11, **caractérisé en ce qu'**on utilise comme fluide de refroidissement un fluide compatible avec l'environnement, non combustible et non nocif, de préférence du gaz carbonique (CO₂).
